# FASCICULE DE BREVET EUROPEEN

(11) **EP 1 382 376 B1**
(45) Date de publication et mention de la délivrance du brevet: **02.07.2008**
(21) Numéro de dépôt: 03291653.8
(22) Date de dépôt: 03.07.2003
(51) Int. Cl.: B01D 53/18, B01J 8/02

(54) **Dispositif de mélange et de distribution d'un fluide dense et d'un fluide léger placé en amont d'un lit granulaire et son utilisation en écoulement descendant**
Vorrichtung zum Mischen und Verteilen eines dichten Fluids und eines leichten Fluids oberhalb eines Partikelbetts für einen abwärtsströmenden Auslauf
Device for mixing and distributing a dense fluid and a light fluid above a granular bed and its use for downflow discharge

(30) Priorité: 16.07.2002 FR 0209076
(43) Date de publication de la demande: 21.01.2004
(73) Titulaire: Institut Français du Pétrole, 92852 Rueil-Malmaison Cedex (FR)
(72) Inventeur: Boyer, Christophe, 69390 Charly (FR); Coupard, Vincent, 69120 Vaulx en Velin (FR)

(56) Documents cités:
- WO-A-95/35159
- FR-A- 703 029
- US-A- 5 014 740
- US-A- 5 679 290
- US-A- 5 688 445
- US-A- 6 042 090

## Description

La présente invention concerne un dispositif permettant d'optimiser le mélange et la distribution de deux fluides constitués pour le premier d'une phase essentiellement gazeuse comprenant le plus souvent au moins en partie de l'hydrogène, et pour le second d'une phase liquide essentiellement composée d'hydrocarbures, ledit dispositif étant placé en amont d'un lit granulaire ou entre deux lits granulaires successifs. Par lits granulaires on entend un ensemble de particules solides ayant la forme de grains, ces grains pouvant avoir une forme quelconque mais le plus souvent approximativement cylindrique ou sphérique, et ayant des dimensions typiques de l'ordre de quelques millimètres. Ces solides granulaires présentent avantageusement une activité catalytique. De façon préférée, le dispositif de mélange et de distribution de la présente invention est intégré dans un réacteur pouvant contenir un ou plusieurs lits granulaires fixes successifs et séparés entre eux, dans lequel l'écoulement des phases liquides et gazeuses est à co-courant descendant à travers le ou lesdits lits fixes de solides granulaires.

On parlera indifféremment dans la suite de la présente description de systèmes ou de dispositifs de mélange et de distribution. Ces systèmes peuvent être placés de manière générale en amont d'un lit granulaire, entre deux lits granulaires successifs, et de façon générale en tête d'un réacteur alimenté par au moins deux fluides d'état physique différent, généralement un liquide et un gaz.

L'invention décrite dans la présente demande s'applique à des réacteurs pour lesquels les flux de liquide à distribuer sont généralement compris entre 0,5 et 100 kg/m²/s et plus habituellement compris entre 10 et 80 kg/m²/s.

La présente invention trouve en particulier une application dans tous les cas où la phase gazeuse est minoritaire par rapport à la phase liquide, c'est-à-dire où le rapport volumique entre le gaz et le liquide est inférieur à 1, mais elle peut être également utilisée lorsque la phase gazeuse est largement majoritaire par rapport à la phase liquide, c'est-à-dire lorsque le rapport volumique entre le gaz et le liquide est souvent supérieur à 3/1 et habituellement inférieur à 400/1. Le domaine de l'invention s'étend donc à des rapports volumique entre le gaz et le liquide compris entre 0 et 400, 0 exclus.
L'invention s'applique également dans les cas où la réaction est fortement exothermique et nécessite l'introduction dans le réacteur d'un fluide supplémentaire, le plus souvent gazeux, pour refroidir le mélange gaz/liquide.

La présente invention s'applique aussi au cas où la réaction nécessite un contact étroit pour permettre la dissolution d'un composé le plus souvent gazeux, par exemple de l'hydrogène H₂, dans la phase liquide. La présente invention s'applique en particulier dans le domaine des distributeurs gaz/liquide, comme par exemple ceux employés pour la mise en oeuvre des réactions d'hydrotraitement, par exemple d'hydrocraquage, d'hydrodésulfuration, d'hydrodéazotation, d'hydrogénations sélectives ou totales des coupes C₂ à C₅. L'invention s'applique également aux cas de l'hydrogénation sélective des essences de vapocraquage, de l'hydrogénation des composés aromatiques dans des coupes aliphatiques et/ou naphténiques, et de l'hydrogénation des oléfines dans des coupes aromatiques.

Elle trouve aussi son application pour mettre en oeuvre d'autres réactions nécessitant un bon mélange d'une phase gazeuse et d'une phase liquide, par exemple les réactions d'oxydation partielle ou totale, les réactions d'amination, d'acétyloxydation, d'ammoxydation et d'halogénation en particulier de chloration.

Dans le domaine spécifique des réactions d'hydrodésulfuration, d'hydrodéazotation, d'hydrocraquage et particulièrement lorsqu'on désire atteindre des conversions poussées pour obtenir un produit contenant par exemple moins de 30 ppm (parties par million) de soufre, il est nécessaire d'avoir une bonne distribution du gaz et du liquide, mais principalement du liquide, sachant que l'on se situe avec des rapports volumétriques gaz sur liquide qui varient en général d'environ 3/1 à environ 400/1, et le plus souvent d'environ 10/1 à environ 200/1. C'est également le cas dans l'utilisation d'un fluide auxiliaire de refroidissement, appelé quench dans la terminologie anglo-saxonne, où un très bon contact entre ce fluide auxiliaire introduit pour effectuer le refroidissement, et les fluides du procédé, souvent dénommés fluides process, est nécessaire.

### Examen de l'état de l'art :

Le problème de l'optimisation de la distribution d'un fluide composé d'au moins une phase gazeuse et d'au moins une phase liquide, fait déjà l'objet de plusieurs solutions qui sont examinées ci dessous :

Le brevet FR 2 745 202 et le brevet US 5,688,445 proposent ainsi un plateau à cheminées munies de trous étagés le long de la cheminée pour le passage du gaz (trous supérieurs) et du liquide (trous inférieurs). Aucun système n'est prévu dans cet art antérieur pour empêcher les fluctuations de l'interface liquide/gaz au dessus du plateau dues à l'injection du liquide en tête du réacteur. En effet, du fait de leur configuration, tout déséquilibre de cette interface entraîne nécessairement un déséquilibre des flux gaz et liquide d'une cheminée à l'autre, ce qui est évidemment dommageable à l'homogénéité du mélange.

Le brevet WO 95/35159 propose un système de distribution à deux niveaux. Le premier niveau est constitué d'une plaque circulaire avec des rebords destinée à amortir l'impact de l'écoulement gaz/liquide entrant dans le réacteur. Le liquide s'écoule alors depuis ce premier plateau vers le plateau distributeur au travers de tubes dont la base comporte des fentes. Ces tubes ne sont pas en charge liquide et une certaine quantité de gaz peut donc s'écouler en mélange avec le liquide. Ce premier plateau doit calmer les oscillations du niveau liquide sur le deuxième plateau ou plateau distributeur, mais l'entraînement de gaz au niveau des tubes de descente peut produire du moussage au niveau de la garde liquide du plateau distributeur et ainsi dégrader l'alimentation des cheminées de distribution. Le deuxième niveau est constitué d'un plateau à cheminées percées de trous dans leur partie située en dessus du plateau et dans leur partie située en dessous du plateau. L'inconvénient de ce plateau vient du fait que la flexibilité vis à vis du débit liquide est obtenue en mettant en oeuvre deux types de cheminées. En fonction du débit liquide, la densité des points d'injection est donc variable. De plus, la mise en place de deux niveaux impose une hauteur importante en tête du réacteur.

Le brevet US 4,140,625 propose un système de plateaux traversés par des venturis. Le gaz est injecté en tête de ces venturis et le liquide est injecté au niveau du col ou à l'amont du convergent. Le mélange gaz/liquide est alors injecté dans le lit catalytique. Ce système a l'inconvénient de n'offrir qu'une faible flexibilité en débit liquide puisqu'il n'y a qu'un seul niveau de trous pour le liquide.

Le brevet US 5,799,877 propose un système de plateau distributeur dans lequel le gaz et le liquide sont injectés à travers des tubes concentriques, le tube pour injecter le gaz étant situé au centre. Pour garantir une large plage opératoire en terme de débit liquide, la hauteur des tubes d'introduction du liquide est variable suivant les points d'injection. Cette invention a donc l'inconvénient de proposer une densité de points d'injection du liquide variable en fonction du débit liquide. En particulier, les débits de liquide les plus faibles, et qui sont précisément les plus difficiles à bien répartir, bénéficient du nombre de points d'injection le plus faible. D'autre part, aucun système n'est prévu pour amortir les fluctuations du niveau liquide au dessus du plateau qui seraient dues à l'impact de l'écoulement gaz/liquide à l'entrée du réacteur.

En résumé, parmi les systèmes proposés dans ces différents brevets et mettant en oeuvre un plateau à injection mixte des phases liquide et gaz, soit le plateau offre une grande flexibilité en débit liquide mais ne dispose d'aucun moyen pour stabiliser l'interface gaz/liquide en amont du plateau, soit le plateau dispose de deux niveaux pour amortir les fluctuations de l'interface gaz/liquide, mais n'offre qu'une flexibilité réduite en débit liquide.

### Description sommaire de l'invention :

La présente invention a pour objet un dispositif permettant de réaliser le mélange de deux fluides, l'un gazeux léger, l'autre liquide, dense, et la distribution la plus homogène possible de ce mélange sur l'ensemble de la section du réacteur en amont d'un lit de solide granulaire. Le dispositif comprend un plateau sensiblement horizontal, couvrant toute la section de l'enceinte réactionnelle et supportant une multiplicité de cheminées sensiblement verticales et de section avantageusement constante, comportant une extrémité supérieure communiquant avec la partie du réacteur située au dessus du plateau, une extrémité inférieure communiquant avec la partie du réacteur située au dessous du plateau, les dites cheminées étant percées d'orifices latéraux permettant l'introduction du fluide dense et d'une partie du fluide léger à l'intérieur des dites cheminées, et le dit dispositif étant caractérisé par un système tubulaire d'amenée du fluide dense depuis l'extérieur du réacteur jusqu'à un niveau compris entre le plateau et celui d'au moins un orifice latéral des cheminées en contact avec le fluide dense, le système tubulaire présentant des fentes de sortie du fluide dense entièrement immergées dans ledit volume surmontant le plateau.
Le premier fluide, le moins dense, est injecté par l'entrée du réacteur en amont du plateau. Le second fluide, le plus dense, peut être injecté par l'intermédiaire d'un système tubulaire comprenant un tube principal sensiblement vertical avantageusement complété d'une multiplicité de tubes secondaires sensiblement horizontaux décrits plus loin, ce système tubulaire comportant une multiplicité d'orifices débouchant de préférence à un niveau situé légèrement au dessus du niveau du plateau supportant les cheminées, et ce niveau étant entièrement immergé dans le volume de ce second fluide surmontant le plateau. Les deux fluides étant injectés séparément à l'amont du plateau, une interface plane s'établit entre le volume du second fluide reposant sur le plateau supportant les cheminées, et le volume du premier fluide qui occupe l'espace laissé libre entre la partie supérieure du second fluide et la partie supérieure du réacteur. Le système décrit dans cette invention permet de maintenir cette interface, entre le volume du second fluide et le volume du premier fluide, plane et horizontale de manière à contrôler une alimentation homogène des différentes cheminées perforées, par chacun des deux fluides. Plus précisément, la majeure partie du premier fluide est introduite dans les cheminées par des orifices situés à l'extrémité supérieure des dites cheminées et par une première partie des orifices latéraux disposés selon plusieurs niveaux le long des cheminées, et le second fluide est introduit par une seconde partie de ces orifices latéraux située au dessous de la première partie. Ce système permet d'éviter les phénomènes de bouillonnement ou de moussage qui peuvent apparaître dans le volume de fluide dense et perturber l'alimentation des cheminées. Plus précisément, le présent dispositif permet de garantir que l'alimentation des cheminées par le fluide dense se fasse bien selon un état physique homogène de ce fluide dense et identique d'une cheminée à l'autre, et non pas selon un état plus ou moins aéré par la présence d'une partie du fluide léger dans le fluide dense sous forme d'une émulsion ou de très fines bulles, comme cela est possible lorsque l'interface entre les deux fluides est perturbée.

Selon un mode préféré de réalisation, les phases liquides et gazeuses peuvent circuler en écoulement co-courant descendant à travers le ou lesdits lits de solides granulaires.
La densité des cheminées exprimée en nombre de cheminées par m² de section de réacteur sera généralement comprise entre 100 et 700 par m² et préférentiellement entre 150 et 500 par m².

Selon une caractéristique préférée de l'invention les orifices latéraux seront répartis le long des cheminées sur au moins deux niveaux , le niveau le plus bas étant situé à une distance comprise entre 100 et 300 mm par rapport au niveau où débouche le système tubulaire, et les niveaux successifs étant distants entre eux d'au moins 20 mm.

Selon une autre caractéristique de l'invention, les cheminées pourront être prolongées au dessous du niveau du plateau d'une distance (h), cette distance (h) étant préférentiellement comprise entre 10 et 100 mm.

Selon une autre caractéristique de l'invention, la distance (d) séparant l'extrémité inférieure des cheminées du niveau supérieur du lit, sera comprise entre 0 et 50 mm, 0 exclu, et préférentiellement entre 0 et 20 mm , 0 exclu.

Avantageusement, on peut disposer à l'amont de la tête du réacteur, un ballon tampon extérieur au réacteur, relié au présent dispositif par des conduites et permettant l'échange de matière entre la phase liquide et la phase gazeuse, lesdites conduites permettant l'injection séparée dans le réacteur d'une phase essentiellement liquide contenant éventuellement du gaz dissous et d'une phase essentiellement gazeuse , lesdites phases essentiellement liquide et essentiellement gazeuse résultant de la mise en contact préalable de phases liquide et gazeuse dans ledit ballon tampon.
Par phase essentiellement gazeuse, on entend une phase contenant au moins 50% de gaz, de préférence au moins 70% de gaz, et de manière encore plus préférée au moins 90% de gaz. Par phase essentiellement liquide, on entend une phase contenant au moins 50% de liquide, de préférence au moins 70% de liquide, et de manière encore plus préférée au moins 90% de liquide.

Ainsi, la présente invention permet une grande flexibilité au niveau du débit liquide, et garantit l'absence de fluctuations du niveau de l'interface gaz/liquide.
Dans certains cas, l'arrivée des phases et leur introduction dans le réacteur peut se faire à l'état mixte. Pour que l'invention puisse néanmoins être mise en oeuvre, il faut alors disposer en tête du réacteur un système de séparation de cette phase mixte de manière à disposer en sortie du dit système de séparation, d'une phase essentiellement gazeuse et d'une phase essentiellement liquide au sens qui a été donné un peu plus haut. Ce système de séparation fait partie intégrante de la présente invention lorsque les phases gazeuse et liquide sont introduites en mélange dans le réacteur.

D'autres avantages et caractéristiques de l'invention apparaîtront mieux à la lecture de la description donnée ci-après à titre d'exemple de réalisation.

### Description détaillée des figures :

Les figures 1 et 2 schématisent un exemple de réalisation du système de mélange et de distribution lorsque celui est placé en tête d'un premier lit granulaire du réacteur et lorsque les fluides à mélanger peuvent être introduits séparément dans le réacteur.

Les figures 3A et 3B montrent une coupe des tubes perforés.

Les figures 4 et 5 schématisent un exemple de réalisation du système de mélange et de distribution lorsque celui est placé en tête de réacteur ou entre deux lits granulaires successifs, et lorsque les fluides à mélanger peuvent être introduits séparément dans le réacteur.

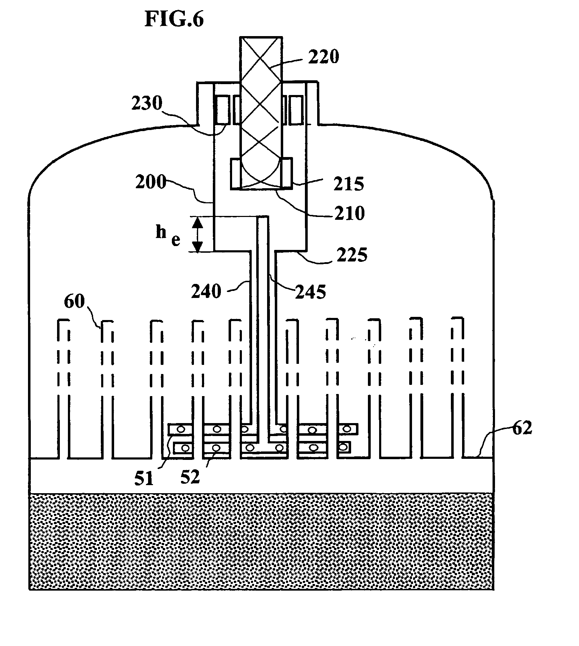

La figure 6 présente un exemple de réalisation du système de mélange et de distribution placé préférentiellement en amont d'un premier lit granulaire, lorsque les fluides à mettre en contact sont introduits dans le réacteur en mélange.

Les figures 7a; 7b; 7c sont des visualisations de la répartition du fluide dense sur une section du réacteur obtenue par tomographie gamma sans le système tubulaire d'amenée du liquide, pour différents débits de gaz.

Les figures 8a; 8b; 8c sont des visualisations de la répartition du fluide dense sur une section du réacteur obtenue par tomographie gamma avec le système tubulaire d'amenée du liquide, pour les mêmes débits de gaz que dans le cas des figures 7a; 7b ; 7c.

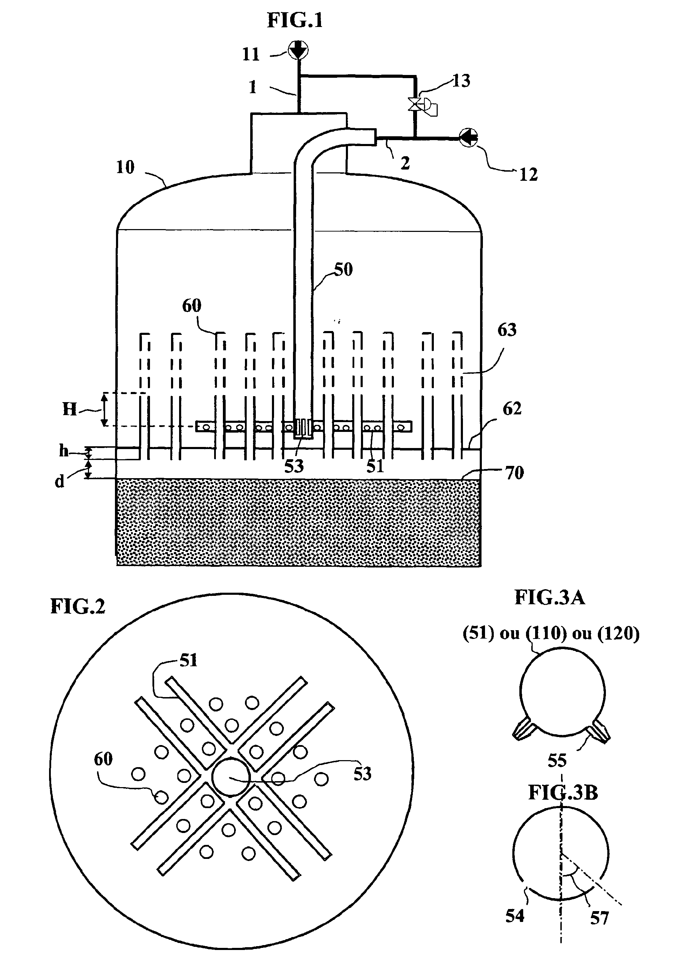

Le réacteur schématisé sur la figure 1 est un réacteur allongé à lit fixe (10) contenant un ou plusieurs lits successifs, qui fonctionne en écoulement gaz/liquide à co-courant descendant. Une charge liquide (12) est injectée à proximité de la tête du réacteur, à travers une ligne (2), dans au moins un tube (50) qu'on appellera également système tubulaire.
Une charge gazeuse (11) est injectée en un ou plusieurs niveaux du réacteur (10), au moins un de ces niveaux étant situé en tête du réacteur. La charge gazeuse est injectée en tête du réacteur par une ligne (1). En cas de montée en pression du système tubulaire (50) ou de la ligne (2), un système de compensation de pression (13) composé d'une vanne de régulation asservie à un capteur de pression différentiel, permet d'évacuer une partie du débit liquide vers la ligne (1).
Un plateau (62) sensiblement horizontal et couvrant toute la section du réacteur est adhérent à la paroi du dit réacteur et supporte une pluralité de cheminées (60) ouvertes à leur extrémité supérieure et présentant le long de leur paroi latérale une série d'orifices de passage (63) de forme soit sensiblement circulaire, soit allongée. Ces cheminées sont sensiblement parallèles à l'axe du réacteur.
Le liquide est injecté avantageusement au plus près du plateau à l'aide d'au moins un tube sensiblement vertical (50) éventuellement muni de fentes (53) de sortie du dit fluide, ces fentes étant disposées sur la périphérie en partie basse du tube (50). Les fentes du tube sont entièrement immergées dans le volume de liquide au dessus du plateau défini par le plateau et un niveau des orifices de passage latéral du liquide, ces orifices étant de préférence entièrement immergés. Le tube (50) pourra également être prolongé par une série de tubes sensiblement horizontaux (51) munis d'orifices de sortie du liquide (54). Le tube (50) est raccordé à la ligne d'injection du liquide (2) après avoir traversé la paroi du réacteur (10).
Le niveau auquel sont situés les tubes perforés (51) ou les fentes périphériques (53) du tube (50) est situé au dessous du niveau le plus bas (dans le sens de l'écoulement des fluides) des sections de passage latérales (63) ou orifices latéraux des cheminées (60) de telle sorte que ces tubes perforés (51) sont immergés dans un volume de liquide qui alimente un ou plusieurs niveaux des sections de passages latérales (63) des cheminées( 60). Le liquide est ainsi injecté directement via la ligne (2) et passe ensuite dans le tube d'alimentation (50) puis les tubes (51) ou les fentes (53).
Les tubes (51) ou les fentes (53) sont entièrement immergés dans le volume liquide retenu par le plateau (62). De cette façon, la présente invention permet, à la différence des dispositifs de l'art antérieur faisant intervenir des cheminées, de maintenir une interface gaz/liquide stable et horizontale. En effet, lorsque de nombreuses cheminées destinées à la distribution des fluides sont disposées sur un plateau pour couvrir au mieux la section du réacteur, il est de première importance de créer une interface gaz/liquide stable et horizontale pour assurer une alimentation en fluides identique entre les différentes cheminées.

De façon générale, la distance séparant le niveau des tubes (51) ou le haut des fentes (53) et le niveau le plus bas des sections de passage latérales (63) des cheminées (60), sera supérieure à 50 mm et de préférence comprise entre 100 mm et 300 mm.
De façon à ce que l'installation du système d'injection du liquide limite le moins possible le nombre de points d'injection gaz/liquide, le ou les tube(s) d'alimentation (50) seront généralement situés à la place d'une ou plusieurs cheminées (60), dans une région voisine de l'axe du réacteur, et les tubes (51) seront disposés selon un axe approximativement horizontal, entre les rangées de cheminées (60). Huit tubes (51) peuvent ainsi être disposés entre les cheminées (60), que le pas entre ces cheminées soit triangulaire ou carré.

La figure 2 montre un exemple de répartition des tubes (51) dans le cas où le pas entre cheminées (60) est triangulaire.

Les figures 3A et 3B présentent une coupe d'un tube (51) et décrivent deux exemples de section de sortie située sur ces tubes. Les sections de sortie (54) situées sur les tubes (51) pourront être des orifices (54) de tailles diverses, ou des buses (55) à section de passage sensiblement constante et circulaire, ou à section de passage variable de manière à présenter une partie convergente suivie d'une partie divergente.
Ces orifices (54) ou buses (55) sont disposés sur la longueur des tubes (51), sensiblement selon un axe horizontal, et sont dirigés généralement vers le bas. De façon préférée, l'angle (α) entre l'axe des orifices ou buses et la verticale sera compris entre -90° et 90° et de préférence compris entre -45° et 45°, en comptant positivement les angles situés sur la moitié droite par rapport à l'axe vertical traversant les tubes (51), et négativement les angles situés sur la moitié gauche par rapport à ce même axe.
La vitesse d'injection du liquide sera déterminée de façon à ce que le tube (50) soit toujours rempli de liquide. La vitesse d'injection du liquide au niveau des orifices ou buses de sortie des tubes (51) ou des fentes (53) sera en général comprise entre 0,5 et 5 m/s. Cette gamme de vitesse permet donc une plage de variation en débit d'alimentation liquide de 1 à 10.

La charge gazeuse et la charge liquide se mélangent à l'intérieur des cheminées perforées (60) dont les sections de passage latérales (63) situées au dessus de l'interface entre la phase liquide et la phase gaz sont utilisées pour l'injection du gaz et dont les sections de passage latérales situées au dessous de l'interface entre la phase gaz et la phase liquide sont utilisés pour l'injection du liquide.
Il faut donc noter que les sections de passage latérales (63), disposées sur plusieurs niveaux au long des cheminées (60) ne sont pas spécifiquement affectées au passage de la phase liquide ou de la phase vapeur, mais se répartiront naturellement en fonction de la position de l'interface, en un groupe supérieur par rapport à cet interface qui verra passer la phase gaz, et un groupe inférieur par rapport au dit interface qui verra passer la phase liquide.
Cet interface a la propriété d'être plan et de rester très bien défini sur toute la plage de débits gaz et liquide envisagée, en raison des caractéristiques du dispositif selon la présente invention, particulièrement du système d'introduction du liquide (50). Une section de passage (63) latérale donnée, et l'ensemble des sections de passage (63) appartenant au même niveau, verront donc passer soit la phase liquide soit la phase gaz , en fonction des débits respectifs de ces phases.
Il est clair que plus le débit de phase liquide sera important, plus l'interface entre la dite phase liquide et la phase gaz sera situé à un niveau élevé, mais ce niveau ne dépassera toutefois jamais le niveau de l'extrémité supérieure des cheminées (60).

Le principe de fonctionnement du dispositif selon la présente invention, consiste à effectuer un pré-mélange des phases liquide et gaz dans les cheminées (60) avant d'injecter ce mélange en différents points de l'entrée du lit par les extrémités inférieures ouvertes des dites cheminées (65).
Les orifices latéraux (63) peuvent être de forme diverse, par exemple ils peuvent se présenter sous forme d'orifices, ou d'une ou plusieurs fentes. Ces orifices latéraux sont disposés sur au moins deux niveaux différents, de préférence entre 3 et 10 niveaux, dont au moins un niveau, situé le plus bas, est utilisé pour le passage du liquide et au moins un niveau, situé le plus haut, est utilisé pour le passage du gaz. La géométrie des cheminées (60) permet ainsi une grande souplesse d'utilisation du plateau en terme de variation du débit liquide et du débit gaz.
La distance entre deux niveaux d'orifices ou de fentes consécutifs est supérieure à 20 mm et de préférence d'au moins 50 mm. La largeur maximale de la section de passage latérale qui correspond selon les cas à la largeur maximale s'il s'agit d'une fente, ou au diamètre maximum s'il s'agit d'un orifice, sera avantageusement inférieure à 75 % du diamètre d'une cheminée et habituellement supérieur à 2 mm. Pour assurer une bonne répartition des points d'injection du mélange gaz liquide résultant en tête de lit catalytique, une certaine densité de cheminées sera nécessaire. Cette densité sera en général comprise entre 100 et 700 cheminées/m² de section de lit , et de préférence comprise entre 150 et 500 cheminées/m². La distance (H) entre le niveau des sections de passage situé le plus bas le long des cheminées (60) et le niveau des tubes (51) ou le niveau du haut des fentes (53) sera en général supérieure à 100 mm et de préférence comprise entre 100 et 300 mm.
Cette distance a d'abord pour effet de laisser un volume de liquide suffisant pour dissiper l'énergie cinétique des jets de liquide issus des tubes (51) par les orifices (54) ou les buses (55) ou des fentes (53), et d'éviter que ces jets de liquide ne perturbent l'interface gaz/liquide qui doit rester autant que possible, parallèle au plateau (62). Cette distance a de plus pour effet d'allonger le temps de séjour du mélange gaz liquide dans les cheminées (60), et donc d'optimiser le transfert de masse entre le gaz et le liquide. Les cheminées ( 60) du plateau (62) jouent ainsi le rôle d'un mélangeur statique.
Enfin les cheminées (60) seront avantageusement prolongées d'une distance (h )en dessous de la plaque de support des cheminées (62) afin d'éviter qu'une partie du liquide se propage sous la face inférieure du plateau (62) et de diminuer l'espace compris entre le point de sortie du mélange et l'entrée dans le lit. La distance (h) sera de préférence comprise entre 10 et 100 mm.
Ensuite, afin d'éviter la séparation du mélange liquide gaz avant son injection dans le lit, la distance entre l'extrémité inférieure des tubes (60) et le haut du lit sera de préférence comprise entre 0 et 50 mm, 0 exclu et de manière encore plus préférée entre 0 et 20 mm, 0 exclu.

En partie supérieure du lit granulaire et reposant sur lui, on disposera généralement une couche de particules sphériques inertes (70), appelé lit de garde, pour maintenir la distribution des fluides gaz et liquide intacte jusqu'au lit catalytique. L'épaisseur de cette couche sera généralement supérieure à 50 mm, de préférence comprise entre 80 et 500 mm, et de manière encore davantage préférée, comprise entre 100 et 300 mm. Le diamètre des particules sphérique inertes utilisées sera généralement supérieur à 6 mm et de préférence supérieur à 15 mm.

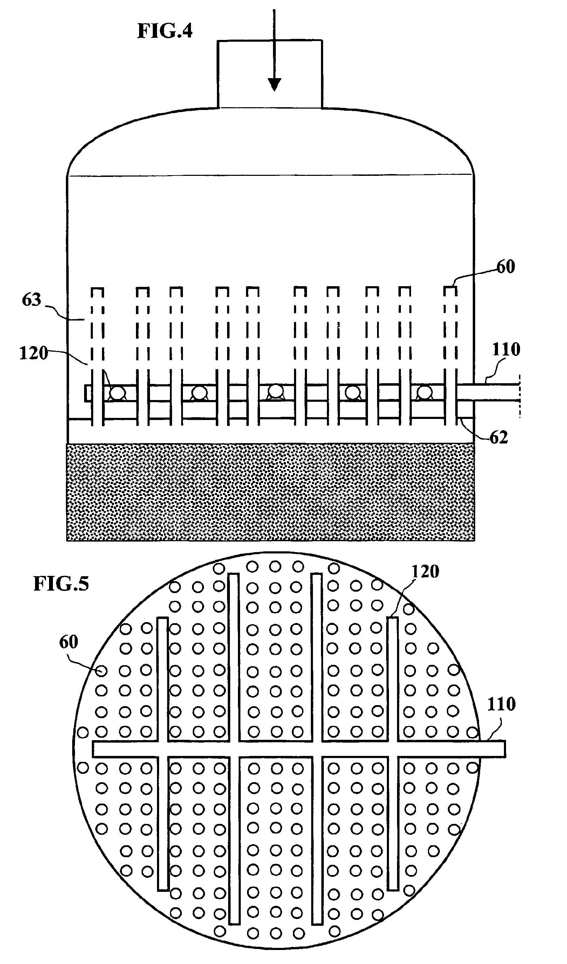

Les figures 4 et 5 présentent un deuxième exemple de réalisation du système de distribution selon l' invention lorsque celui-ci est disposé en tête de réacteur, en amont du premier lit ou entre deux lits successifs, et lorsque au moins l'un des fluides à mélanger est introduit directement depuis l'extérieur du réacteur. Dans ce deuxième exemple le fluide primaire est injecté suivant l'axe du réacteur.
Ce fluide peut être la charge gazeuse lorsque le système est situé en tête de réacteur ou un mélange gaz/liquide issu d'un lit granulaire amont lorsque le système est situé entre deux lits granulaires successifs. Le fluide secondaire est lui injecté par un système de tubes perforés (120) dont le tube principal (110) traverse la paroi latérale du réacteur.
Le fluide secondaire peut être la charge liquide lorsque le système est situé en tête de réacteur ou un effluent liquide ou gazeux destiné à refroidir le mélange gaz/liquide issu d'un lit supérieur lorsque le système est situé entre deux lits granulaires successifs. Le mélange et la distribution du fluide primaire et du fluide secondaire s'effectue à travers des cheminées perforées (60) disposées sur un plateau (62).
Les caractéristiques de ces cheminées (60) sont identiques à celles décrites dans le premier exemple. Le tube (110), appelé tube principal, est disposé de manière sensiblement horizontale entre deux rangées de cheminées et peut être prolongé de tubes secondaires (120) latéraux raccordées au tube principal et s'étendant également selon un axe sensiblement horizontal ou simplement perforé par des orifices circulaires, elliptiques ou rectangulaires.
Les tubes secondaires (120) sont de préférence situés dans le même plan que le tube principal. De façon générale, la distance entre le niveau des tubes (110) et (120) et le niveau situé le plus bas des sections de passage latérales (63) situées sur les cheminées (60) sera supérieure à 50 mm et de préférence comprise entre 100 et 500 mm.
Cette distance permet à l'énergie cinétique des jets liquide ou gazeux issus des tubes (120) de se dissiper afin de ne pas perturber l'interface gaz/liquide situé au dessus du plateau. De plus lorsque le fluide secondaire a pour but de refroidir le mélange gaz/liquide issu d'un lit granulaire situé en amont, cette distance permet d'augmenter le temps de contact nécessaire pour réaliser un bon échange thermique.

La figure (5) présente un exemple de configuration en vue de dessus, du réseau de tubes (120) utilisés pour l'injection du fluide secondaire dans le cas où le pas entre les cheminées (60) est carré. Dans ce cas, les tubes secondaires (120) sont disposés sensiblement orthogonalement au tube principal (110). Les caractéristiques des sections de sortie des tubes secondaires (120) sont les mêmes que celles décrites à la figure (3).
Les sections de sortie des tubes (120) ou (110) pourront être des orifices (54) de formes diverses ou des buses (55) dont la section de passage peut être approximativement constante et circulaire ou variable de manière à présenter une partie convergente suivie d'une partie divergente.
Ces orifices ou buses seront dirigés généralement vers le bas, et de façon préférée l'angle (57) entre l'axe de l'orifice et la verticale sera compris entre -90° et 90°, et de préférence compris entre -45° et 45°. Lorsque le fluide secondaire est liquide, la vitesse d'injection du liquide au niveau des orifices (54) ou des buses (55) sera comprise entre 0,5 et 3 m/s. Lorsque le fluide secondaire est gazeux, la vitesse d'injection au niveau des orifices (54) ou des buses (55) sera avantageusement comprise entre 0.5 et 5 m/s. Cette gamme de vitesse permet donc une plage de variation en débit de gaz de 1 à 10.

La figure (6) présente un troisième mode de réalisation du dispositif de distribution selon l'invention lorsque celui-ci est disposé en tête du réacteur, et lorsque les fluides à mélanger et à distribuer sont introduits en mélange, qu'on appellera aussi en phase mixte, dans le réacteur. En effet, lorsqu'il n'est pas possible d'injecter séparément dans le réacteur les fluides à distribuer, ces fluides sont généralement introduits sous la forme d'un écoulement diphasique à co-courant vers le bas.
Dans ce cas, le système de distribution est toujours constitué d'un plateau à cheminées (60) disposant de sections de passage latérales (63) pour l'alimentation des deux fluides, mais, il est précédé d'un système de séparation (200) permettant la séparation des deux fluides à l'amont du plateau (62). L'introduction du fluide gazeux résultant de cette séparation en tête du réacteur se fait au moyen de fenêtres de sortie latérales (230), et l'introduction du fluide liquide résultant de la dite séparation au niveau du plateau (62) se fait par un système de tubes concentriques (240) et (245) qui alimentent le réseau de tubes (51) dans les mêmes conditions que dans le cas précédemment décrit.
Les caractéristiques des cheminées (60) sont identiques à celles décrites dans le premier exemple. Le système de séparation (200) est constitué d'un tube cylindrique central (210) terminé par au moins une sortie tangentielle (215) pour le liquide et par au moins une sortie tangentielle pour le gaz (230), imposant à l'écoulement une rotation d'au moins 90° par rapport à l'axe du tube.
Ce système, déjà décrit dans le brevet FR 2 798 864, permet une séparation rapide d'un mélange gaz/liquide dont le rapport des débits massiques du gaz sur le liquide est compris entre 0,1 et 10. Le nombre de sorties tangentielles pour le gaz et pour le liquide est compris entre 1 et 4, de préférence égal à deux pour chaque phase. A titre d'exemple, le rapport des sections d'ouverture de chaque sortie tangentielle sur la section de passage du tube (210) est compris entre 0,25 et 1, et de préférence entre 0,4 et 0,6.
Le rapport entre la hauteur et la largeur de la sortie tangentielle (215) est en général compris entre 1 et 4, de préférence sensiblement égal à 2. A l'intérieur du tube (210) et en amont des sorties tangentielles (215), une hélice (220) peut être ajoutée. Cette hélice (220) peut être à simple révolution ou à double révolution. Le rapport de la largeur de l'hélice, correspondant à la section de passage des fluides, sur la diamètre du tube peut être compris entre 0,5 et 1.
Le nombre de pas de l'hélice (soit le rapport de la hauteur totale de l'hélice sur le pas de l'hélice) est compris généralement entre 1 et 6, et préférentiellement entre 2 et 3.

Les fluides issus du tube (210) sont récupérés dans une enceinte (225) dont le diamètre est supérieur au double du diamètre du tube (210) et inférieur à 90 % du diamètre du réacteur. Cette enceinte a pour but d'amortir les fluctuations de débit du liquide à injecter au niveau du plateau (62).
Le gaz est évacué de l'enceinte (225) à travers les sections de sortie tangentielles (230). Ces sections de sortie peuvent être constituées par exemple d'orifices de forme circulaire ou elliptique, ou de fentes de forme rectangulaire. Le rapport de l'aire totale des sections de sortie (230), c'est à dire la somme des aires des sections (230) divisée par l'aire de la section du tube (210) sera compris entre 0,5 et 4, de préférence sensiblement égal à 2.
La distance (p) séparant les sections de sortie (230) des sections de sortie (215) sera en général au moins égale à 50 mm et en particulier comprise entre 100 et 300 mm. Le liquide est évacué de l'enceinte (225) à l'aide d'au moins un tube (240) dont l'extrémité supérieure est raccordé au fond de l'enceinte (225) et dont l'extrémité inférieure est raccordée à au moins un tube perforé horizontal (51).
Les sections de sortie des tubes (51) pourront être des orifices (54) de taille diverse ou des buses (55) dont la section de passage pourra être approximativement constante et circulaire ou variable, de manière à présenter une partie convergente suivie d'une partie divergente. Ces orifices (54) ou buses (55) seront dirigés généralement vers le bas et de façon préférée l'angle (57) entre l'axe de l'orifice et la verticale sera compris entre -90° et 90°, et de préférence compris entre -45° et 45°. Le diamètre des orifices (54) ou des buses (55) sera calculé de façon à maintenir le tube (240) rempli de liquide, ou plus généralement de fluide dense sur toute la plage de débit de ce fluide. La plage de variation de débit correspondra donc à la variation de la hauteur du niveau du fluide dense dans l'enceinte (225).
Ce niveau sera toujours inférieur à la distance séparant le bas du tube (210) du fond de l'enceinte (225). Pour augmenter la plage de débit en fluide dense, un deuxième tube d'évacuation de l'enceinte (225) peut être ajouté. Ce deuxième tube (245), généralement concentrique et situé à l'intérieur du tube (240), débouche dans l'enceinte (225) par son extrémité supérieure qui sert d'orifice d'entrée du fluide dense.

Cette extrémité supérieure du tube (245) est située à une distance hₑ du fond de l'enceinte (225) de manière que ce deuxième tube (245) ne soit utilisé que lorsque le débit de fluide dense correspond à un niveau en fluide dense dans l'enceinte (225) supérieur à la distance hₑ. Ce tube (245) est également raccordé à sa partie inférieure à au moins un tube perforé (52) du même type que les tubes perforés (51). Ce tube (245) peut être concentrique au tube (240) comme cela est représenté à la figure (5) ou indépendant du tube (240).
Les caractéristiques des tubes (52) sont les mêmes que celles des tubes (51). Le diamètre de passage des orifices ou buses de sortie des tubes (52) est calculé de façon à ce que le niveau en fluide dense dans l'enceinte (225) au débit maximum de ce fluide dense, ne dépasse jamais la distance comprise entre le fond de l'enceinte (225) et l'extrémité inférieure du tube (210).

L'exemple qui suit illustre l'invention.

### Exemple comparatif entre un plateau selon l'état de l'art et un plateau selon l'invention:

Un test comparatif a été effectué entre un système classique constitué d'un plateau à cheminées perforées alimenté par un écoulement gaz/liquide co-courant et un système, tel que décrit à la figure 4, comprenant un plateau à cheminées perforées alimenté en liquide par un tube radial. Les deux systèmes ont été testés sur un réacteur de diamètre 400 mm.

Le système de distribution de référence ou selon l'art antérieur, est constitué d'un plateau sur lequel sont fixées 55 cheminées de diamètre 15 mm. Les cheminées sont perforées de 20 orifices circulaires de diamètre 7 mm s'étageant sur 10 niveaux compris entre 50 et 250 mm par rapport au niveau du plateau. Lors des essais comparatifs réalisés, le système de distribution était directement alimenté par un écoulement gaz/liquide à co-courant descendant introduit sensiblement selon la direction de l'axe vertical, au sommet du réacteur.

Le système de distribution tel que décrit dans la présente demande est constitué d'un plateau sur lequel sont fixées 55 cheminées (60) de diamètre 15 mm. Les cheminées (60) sont perforées de 16 orifices circulaires de diamètre 7 mm situés sur 8 niveaux s'étageant entre 90 et 250 mm par rapport au niveau du plateau. Le liquide est introduit à l'aide d'un tube (110) traversant la paroi latérale du réacteur suivant la géométrie décrite à la figure n°4. Ce tube est perforé de 68 orifices de diamètre 7 mm disposés de manière approximativement équirépartie, selon les angles (57) suivants par rapport à la verticale de : -45°, -30°, 30° et 45°. Pour l'essai présenté, la vitesse liquide au niveau de ces orifices est égale à 3.8 m/s. La distance entre le niveau des orifices du tube (110) et le niveau le plus bas des orifices des cheminées est de 50 mm.

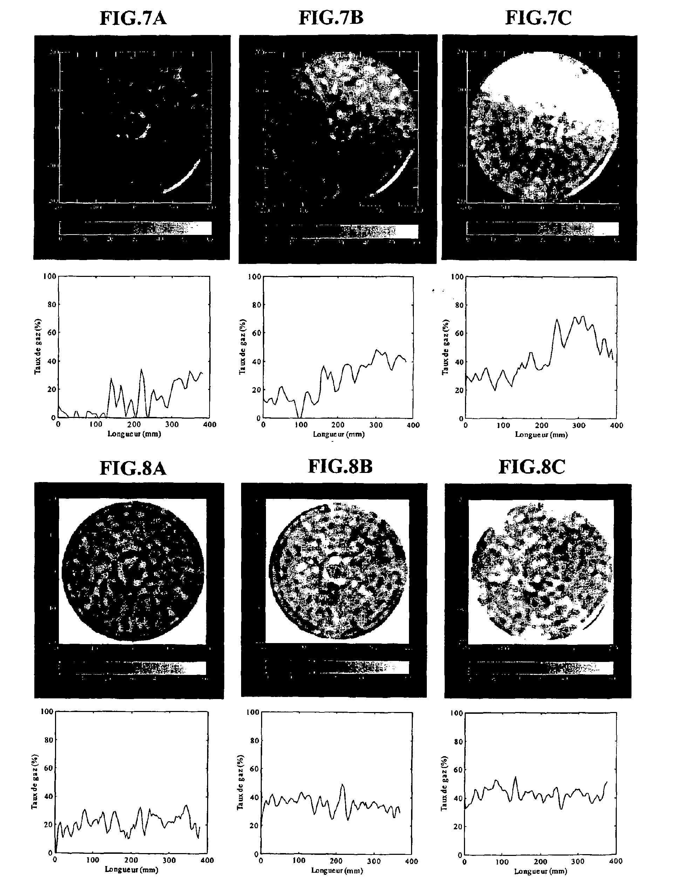

La figure n°7 présente une comparaison de la répartition du taux de gaz mesurée dans le lit catalytique à l'aide d'un tomographe à rayon gamma situé à une distance de 500 mm du bas des cheminées (60). Les figures 7 et 8 présentent l'image du taux de gaz mesurée respectivement lorsque le système de distribution classique est utilisé et lorsque le système décrit selon l'invention est mis en place. L'échelle de couleurs s'étend du noir pour un taux de gaz de zéro (écoulement liquide seul) au blanc pour un taux de gaz de 60 %. Le débit de liquide rapporté à la section vide du réacteur est de 56 kg/m²/h, et le débit de gaz est de 0,2 kg/m²/h (figure 7a et 8a), 0,5 Kg/m2/h (figure 7b et 8b) et 1 kg/m²/h (figure 7c et 8c).
Comme on peut le constater en l'absence d'un système d'amenée du liquide, la distribution du gaz sur la section du lit est nettement dégradée en ce sens que les figures (7) montrent des niveaux de gris beaucoup moins uniformes que ceux des figures (8). En effet, comme le montrent les profils obtenus sur un diamètre du réacteur, le taux de gaz n'est pas du tout homogène sur toute la section.
En effet, le niveau liquide est déséquilibré au niveau du plateau et les cheminées ne sont pas toutes alimentées de la même façon. Par contre, le système tel que décrit selon l'invention permet d'obtenir une distribution homogène du gaz sur toute la section du lit. Les profils de taux de gaz obtenus sur un diamètre de réacteurs sont tous très horizontaux. L'efficacité du système de distribution reste excellente lorsque le taux de gaz volumique dans le mélange gaz/liquide varie de 20 à 50 %.

## Revendications

1. Dispositif de mélange et de répartition d'un fluide dense, généralement liquide, et d'un fluide léger, généralement gazeux, pouvant être placé dans une enceinte réactionnelle en amont d'un lit granulaire ou entre deux lits granulaires successifs, le dit dispositif comportant :
- un plateau (62) sensiblement horizontal, pouvant couvrir toute la section de l'enceinte réactionnelle et supportant
- une multiplicité de cheminées (60) sensiblement verticales comportant une extrémité supérieure pouvant communiquer avec la partie du réacteur située au dessus du plateau (62), une extrémité inférieure communiquant avec la partie du réacteur située au dessous du plateau (62), les dites cheminées étant percées d'orifices latéraux (63), permettant l'introduction du fluide dense et d'une partie du fluide léger à l'intérieur des cheminées (60), le dit dispositif étant **caractérisé par** un système tubulaire (50) pouvant amener du fluide dense depuis l'extérieur du réacteur dans un volume compris entre le plateau et le niveau d'au moins un orifice latéral (63) des cheminées en contact avec le fluide dense, le système tubulaire présentant des fentes de sortie du fluide dense entièrement immergées dans ledit volume surmontant le plateau (62).

2. Dispositif de mélange et de répartition suivant la revendication 1 dans lequel le système tubulaire est situé à un niveau voisin du niveau du plateau.

3. Dispositif selon l'une des revendications 1 à 2 dans lequel la densité des cheminées est comprise entre 100 et 700 par m² de section de réacteur, et préférentiellement comprise entre 150 et 500 par m² de section de réacteur.

4. Dispositif selon l'une des revendications 1 à 3 dans lequel les orifices latéraux (63) sont répartis le long des cheminées (60) sur plusieurs niveaux, le niveau le plus bas étant situé à une distance comprise entre 100 et 300 mm par rapport au niveau où débouche le système tubulaire (50).

5. Dispositif selon l'une des revendications 1 à 4 dans lequel les cheminées (60) sont prolongées d'une distance h au dessous du niveau du plateau (62), cette distance h étant préférentiellement comprise entre 10 et 100 mm.

6. Dispositif selon les revendications 1 à 5 dans lequel la distance (d) séparant l'extrémité inférieure des cheminées (60) du niveau supérieur du lit situé immédiatement au dessous est comprise entre 0 et 50 mm, 0 exclu, et de préférence comprise entre 0 et 20 mm, 0 exclu.

7. Dispositif selon l'une des revendications 1 à 6 dans lequel le système tubulaire (50) comprend un tube principal sensiblement vertical et une multiplicité de tubes secondaires (51) sensiblement horizontaux munis d'orifices de sortie (54).

8. Dispositif selon l'une des revendications 1 à 7 dans lequel le système tubulaire (50) comprend un tube sensiblement vertical muni à son extrémité inférieure de fentes latérales (53) situées à une distance par rapport au niveau le plus bas des orifices latéraux (63) des cheminées (60), comprise entre 100 mm et 500 mm.

9. Dispositif selon l'une des revendications 7 à 8 dans lequel les orifices de sortie (54) des tubes secondaires (51) sont dirigés vers le bas en formant un angle par rapport à la verticale qui est compris entre -90 et + 90° et préférentiellement compris entre -45° et + 45°.

10. Dispositif selon l'une des revendications 7 à 9 dans lequel les orifices de sortie (54) des tubes secondaires (51) ont la forme de buse à section sensiblement constante.

11. Dispositif selon l'une des revendications 7 à 10 dans lequel les orifices de sortie (54) des tubes secondaires (51) ont la forme de buse à section variable de manière à présenter dans le sens d'écoulement du fluide une partie convergente suivie d'une partie divergente.

12. Dispositif selon l'une des revendications 1 à 11 dans lequel les orifices latéraux (63) des cheminées (60) sont réparties sur au moins deux niveaux, les dits niveaux étant distants entre eux d'au moins 20 mm.

13. Dispositif selon l'une des revendications 1 à 12 dans lequel la largeur maximale des sections de passage (63), ou leur diamètre lorsqu'elles sont circulaires, est inférieure à 75 % du diamètre des cheminées (60) et supérieure à 2 mm.

14. Dispositif selon l'une des revendications 1 à 13 dans lequel on ajoute en tête du réacteur un système de séparation (200) des phases gaz et liquide lorsque les fluides à distribuer sont introduits en mélange, le dit système de séparation comprenant un tube cylindrique (210) muni d'internes permettant une mise en rotation et une séparation du dit mélange.

15. Dispositif selon la revendication 14 dans lequel le système de séparation (200) possède de 1 à 4 sorties tangentielles pour la phase liquide (215) et pour la phase gaz (230), le rapport de l'aire totale des sections de sortie du gaz (230), c'est à dire la somme des aires des sections (230) divisée par l'aire de la section du tube (210) étant compris entre 0,5 et 4 fois la section de passage du tube cylindrique (210), et préférentiellement sensiblement égal à 2.

16. Dispositif selon l'une des revendications 14 à 15 dans lequel les sorties tangentielles (215) pour le liquide et (230) pour le gaz du système de séparation (200), sont distantes d'une distance (p) supérieure à 50 mm et préférentiellement comprise entre 100 mm et 300 mm.

17. Dispositif selon l'une des revendications 14 à 16 dans lequel le tube cylindrique (210) du système de séparation (200) contient une hélice dont le nombre de pas est compris entre 1 et 6, et préférentiellement entre 2 et 3.

18. Utilisation du dispositif selon l'une quelconque des revendications 1 à 17 dans un procédé d'hydrotraitement d'hydrocarbures.

19. Utilisation du dispositif selon la revendication 18 dans des réacteurs à co courant descendant de gaz et de liquide dans lesquels le rapport volumique gaz sur liquide est compris entre 0 et 400, 0 exclu.

20. Utilisation du dispositif selon la revendication 19 dans des réacteurs à co courant descendant de gaz et de liquide, le flux de liquide étant compris entre 0,5 et 100 kg/m²/seconde et préférentiellement compris entre 10 et 80 kg/m²/seconde.

## Claims

1. Device for mixing and distributing a dense, generally liquid, fluid and a light, generally gaseous, fluid, that can be placed in a reaction chamber upstream from a granular bed or between two successive granular beds, the said device comprising:
- a more or less horizontal plate (62), that can cover all of the section of the reaction chamber and supporting
- a multiplicity of substantially vertical pipes (60) including an upper end that can communicate with the part of the reactor situated above the plate (62), a lower end communicating with the part of the reactor situated below the plate (62), the said pipes being pierced by lateral orifices (63) permitting the introduction of the dense fluid and of some of the light fluid inside the said pipes (60), the said device being **characterized by** a tubular system (50) that can introduce the dense fluid from outside the reactor into a volume between the plate and the level of at least one lateral orifice (63) of the pipes in contact with the dense fluid, the tubular system having exit slots for the dense fluid that are wholly immersed in the said volume surmounting the plate (62).

2. Mixing and distribution device according to claim 1 in which the tubular system is situated at a level next to the level of the plate.

3. Device according to one of claims 1 to 2 in which the density of the pipes is between 100 and 700 per m² of reactor section, and preferably between 150 and 500 per m² of reactor section.

4. Device according to one of claims 1 to 3 in which the lateral orifices (63) are distributed along the pipes (60) on several levels, the lowest level being situated at a distance of between 100 and 300 mm relative to the level where the tubular system (50) discharges.

5. Device according to one of claims 1 to 4 in which the pipes (60) are extended by a distance h below the level of the plate (62), this distance h preferably being between 10 and 100 mm.

6. Device according to claims 1 to 5 in which the distance (d) separating the lower end of the pipes (60) from the upper level of the bed situated immediately below is between 0 and 50 mm, excluding 0, and preferably between 0 and 20 mm, excluding 0.

7. Device according to one of claims 1 to 6 in which the tubular system (50) comprises a more or less vertical principal tube and a multiplicity of more or less horizontal secondary tubes (51) fitted with exit orifices (54).

8. Device according to one of claims 1 to 7 in which the tubular system (50) comprises a more or less vertical tube fitted at its lower end with lateral slots (53) situated at a distance, relative to the lowest level of the lateral orifices (63) of the pipes (60), of between 100 mm and 500 mm.

9. Device according to one of claims 7 to 8 in which the exit orifices (54) of the secondary tubes (51) are directed downwards forming an angle relative to the vertical which is between -90 and +90° and preferably between -45° and +45°.

10. Device according to one of claims 7 to 9 in which the exit orifices (54) of the secondary tubes (51) have the form of a nozzle with a more or less constant section.

11. Device according to one of claims 7 to 10 in which the exit orifices (54) of the secondary tubes (51) have the form of a nozzle with a variable section so as to present, in the direction of flow of the liquid, a convergent part followed by a divergent part.

12. Device according to one of claims 1 to 11 in which the lateral orifices (63) of the pipes (60) are distributed over at least two levels, the said levels being spaced at least 20 mm apart from each other.

13. Device according to one of claims 1 to 12 in which the maximum width of the passage sections (63), or their diameter when they are circular, is less than 75% of the diameter of the pipes (60) and greater than 2 mm.

14. Device according to one of claims 1 to 13 in which there is added at the top of the reactor a system (200) for separating the gas and liquid phases when the fluids to be distributed are introduced in a mixture, the said separation system comprising a cylindrical tube (210) with internal fittings permitting a rotation and a separation of the said mixture.

15. Device according to claim 14 in which the separation system (200) has from 1 to 4 tangential exits for the liquid phase (215) and for the gas phase (230), the ratio of the total area of the exit sections of the gas (230), that is to say the sum of the areas of the sections (230) divided by the area of the section of the tube (210) being between 0.5 and 4 times the passage section of the cylindrical tube (210), and preferably more or less equal to 2.

16. Device according to one of claims 14 to 15 in which the tangential exits (215) for the liquid and (230) for the gas of the separation system (200) are spaced at a distance (p) greater than 50 mm and preferably between 100 mm and 300 mm.

17. Device according to one of claims 14 to 16 in which the cylindrical tube (210) of the separation system (200) contains a screw the pitch number of which is between 1 and 6, and preferably between 2 and 3.

18. Use of the device according to any one of claims 1 to 17 in a hydrotreatment process for hydrocarbons.

19. Use of the device according to claim 18 in descending gas and liquid co-current reactors in which the volume ratio of gas to liquid is between 0 and 400, excluding 0.

20. Use of the device according to claim 19 in descending gas and liquid co-current reactors, the liquid flux being between 0.5 and 100 kg/m²/second and preferably between 10 and 80 kg/m²/second.

## Patentansprüche

1. Vorrichtung zum Mischen und Verteilen eines dichten Fluids, im Allgemeinen einer Flüssigkeit, und eines leichten Fluids, im Allgemeinen gasförmiger Beschaffenheit, welche innerhalb eines Reaktionsbehälters einem Schüttbett vorgeschalten oder zwischen zwei aufeinander folgenden Schüttbetten angeordnet werden kann, wobei die Vorrichtung Folgendes aufweist:
- eine im Wesentlichen horizontale Platte (62), welche sich über den gesamten Querschnitt des Reaktionsbehälters erstrecken kann, und tragend
- eine Vielzahl von im Wesentlichen vertikalen Schächten (60), welche ein oberes Ende aufweisen, das mit dem Abschnitt des Reaktors, welcher oberhalb der Platte (62) gelegen ist, in Verbindung stehen kann, sowie ein unteres Ende, das mit dem Abschnitt des Reaktors, welcher unterhalb der Platte (62) gelegen ist, in Verbindung steht, wobei in die Schächte seitliche Öffnungen (63) gebohrt sind, welches es ermöglichen, das dichte Fluid und einen Teil des leichten Fluids in das Innere der Schächte (60) einzuleiten, wobei die Vorrichtung **dadurch gekennzeichnet ist, dass** über ein Röhrensystem (50) dichtes Fluid von außerhalb des Reaktors in ein Volumen eingeleitet werden kann, welches sich zwischen der Platte und der Höhe mindestens einer seitlichen Öffnung (63) der Schächte, die in Kontakt mit dem dichten Fluid stehen, befindet, wobei das Röhrensystem Austrittspalten für das dichte Fluid aufweist, welche vollständig in das oberhalb der Platte (62) befindliche Volumen eintauchen.

2. Vorrichtung zum Mischen und Verteilen nach Anspruch 1, wobei sich das Röhrensystem auf einer Höhe befindet, welche der Höhe der Platte nahekommt.

3. Vorrichtung gemäß einem der Ansprüche 1 bis 2, wobei die Dichte der Schächte 100 bis 700 pro m² Reaktorquerschnitt beträgt und vorzugsweise 150 bis 500 pro m² Reaktorquerschnitt beträgt.

4. Vorrichtung gemäß einem der Ansprüche 1 bis 3, wobei die seitlichen Öffnungen (63) entlang der Schächte (60) auf mehrere Höhen verteilt sind, wobei die niedrigste Höhe einen Abstand von 100 bis 300 mm zu derjenigen Höhe aufweist, auf welcher das Röhrensystem (50) mündet.

5. Vorrichtung gemäß einem der Ansprüche 1 bis 4, wobei die Schächte (60) unterhalb der Höhe der Platte (62) um einen Abstand h verlängert sind, wobei der Abstand h vorzugsweise 10 bis 100 mm beträgt.

6. Vorrichtung gemäß den Ansprüchen 1 bis 5, wobei der Abstand (d) zwischen dem unteren Ende der Schächte (60) und der oberen Höhe des Bettes, welches sich unmittelbar darunter befindet, zwischen 0 und 50 mm, 0 ausgeschlossen, liegt, und vorzugsweise 0 bis 20 mm, 0 ausgeschlossen, beträgt.

7. Vorrichtung gemäß einem der Ansprüche 1 bis 6, wobei das Röhrensystem (50) eine Hauptröhre umfasst, die im Wesentlichen vertikal angeordnet ist, sowie eine Vielzahl von Nebenröhren (51), die im Wesentlichen horizontal angeordnet sind und mit Austrittsöffnungen (54) versehen sind.

8. Vorrichtung gemäß einem der Ansprüche 1 bis 7, wobei das Röhrensystem (50) eine im Wesentlichen vertikal angeordnete Röhre umfasst, die an ihren unteren Ende mit seitlichen Schlitzen (53) versehen ist, welche zur untersten Höhe der seitliche Öffnungen (63) der Schächte (60) in einem Abstand von 100 mm bis 500 mm angeordnet sind.

9. Vorrichtung gemäß einem der Ansprüche 7 bis 8, wobei die Austrittsöffnungen (54) der Nebenröhren (51) nach unten ausgerichtet sind und dabei zur Vertikalen einen Winkel bilden, der im Bereich von - 90° bis +90° einschließlich liegt und vorzugsweise -45° bis +45° beträgt.

10. Vorrichtung gemäß einem der Ansprüche 7 bis 9, wobei die Austrittsöffnungen (54) der Nebenröhren (51) die Form einer Düse mit im Wesentlichen konstantem Querschnitt aufweisen.

11. Vorrichtung gemäß einem der Ansprüche 7 bis 10, wobei die Austrittsöffnungen (54) der Nebenröhren (51) die Form einer Düse mit variablem Querschnitt aufweisen, sodass sie in Flussrichtung des Fluids zunächst einen sich verjüngenden Abschnitt und dann einen sich erweiternden Abschnitt aufweisen.

12. Vorrichtung gemäß einem der Ansprüche 1 bis 11, wobei die seitlichen Öffnungen (63) der Schächte (60) auf mindestens zwei Höhenstufen verteilt sind, wobei die Höhenstufen einen Abstand von mindestens 20 mm zueinander aufweisen.

13. Vorrichtung gemäß einem der Ansprüche 1 bis 12, wobei die größte Breite der Durchtrittsabschnitte (63), beziehungsweise deren Durchmesser, wenn sie kreisförmig sind, weniger als 75 % des Durchmessers der Schächte (60) beträgt und größer als 2 mm ist.

14. Vorrichtung gemäß einem der Ansprüche 1 bis 13, wobei am Kopfende des Reaktors ein System (200) hinzugefügt wird, mittels dessen bei gemischter Einleitung der zu verteilenden Fluids die Gasphase und die Flüssigphase voneinander getrennt werden, wobei das Trennsystem eine zylindrische Röhre (210) umfasst, welche mit Einbauten versehen ist, die es ermöglichen, die Mischung in Rotation zu bringen und zu trennen.

15. Vorrichtung gemäß dem Anspruch 14, wobei das Trennsystem (200) 1 bis 4 tangential angeordnete Austrittsöffnungen für die Flüssigphase (215) und für die Gasphase (230) aufweist, wobei das Verhältnis der Gesamtfläche der Gasaustrittsabschnitte (230), das heißt die Summe der Abschnittsflächen (230), zur Querschnittsfläche der Röhre (210) zwischen 0,5 und 4mal der Querschnittsfläche der zylindrischen Röhre (210) entspricht und vorzugsweise im Wesentlichen gleich 2 ist.

16. Vorrichtung gemäß einem der Ansprüche 14 bis 15, wobei die tangential angeordneten Austrittsöffnungen (215) für die Flüssigkeit und (230) für das Gas des Trennsystems (200) in einem Abstand (p) von mehr als 50 mm zueinander angeordnet sind, wobei dieser vorzugsweise 100 mm bis 300 mm beträgt.

17. Vorrichtung gemäß einem der Ansprüche 14 bis 16, wobei die zylindrische Röhre (210) des Trennsystems (200) eine Schraube enthält, deren Gangzahl zwischen 1 und 6 einschließlich liegt und vorzugsweise 2 bis 3 beträgt.

18. Verwendung der Vorrichtung gemäß einem beliebigen der Ansprüche 1 bis 17 in einem Verfahren zur Hydrobehandlung von Kohlenwasserstoffen.

19. Verwendung eines Verfahrens gemäß Anspruch 18, bei dem die Gleichstromreaktoren Gas und Liquid absteigen lassen, wobei das Volumenverhältnis Gas/Liquid zwischen 4 und 400 beträgt, 0 ausgeschlossen.

20. Verwendung des Verfahrens gemäß Anspruch 19, bei dem die Gleichstromreaktoren Gas und Liquid absteigen lassen, wobei der Liquidfluss zwischen 0,5 und 100 kg / m² / s beträgt und insbesondere zwischen 10 und 80 kg / m² / s beträgt.
